Europäisches Patentamt

European Patent Office

Office européen des brevets

(19)

(11) Veröffentlichungsnummer : **0 035 156**
**B1**

(12) **EUROPÄISCHE PATENTSCHRIFT**

(45) Veröffentlichungstag der Patentschrift :
26.09.84

(21) Anmeldenummer : 81101081.8

(22) Anmeldetag : 16.02.81

(51) Int. Cl.³ : **H 02 M   3/335**

(54) **Freischwingender Sperrwandler.**

(30) Priorität : 28.02.80 DE 3007566

(43) Veröffentlichungstag der Anmeldung :
09.09.81 Patentblatt 81/36

(45) Bekanntmachung des Hinweises auf die Patenterteilung : 26.09.84 Patentblatt 84/39

(84) Benannte Vertragsstaaten :
AT BE CH DE FR IT LI NL SE

(56) Entgegenhaltungen :
US-A- 3 911 352
US-A- 4 084 219
REVIEW OF THE ELECTRICAL COMMUNICATION LABORATORIES, Band 21, Nr. 11-12, November-Dezember 1973, Seiten 753-763, Tokyo, JP. I. HIGA-SHINO et al.: « Compact power supply for new printers »
SIEMENS BAUTEILE REPORT, Band 15, Nr. 3, Juni 1977, Seiten 122-126, München, DE., G. PLAZ: « Schaltnetzteile für professionelle Anwendungen »

(73) Patentinhaber : **Siemens Aktiengesellschaft Berlin und München Wittelsbacherplatz 2 D-8000 München 2 (DE)**

(72) Erfinder : **Bete, Manfred Steigerwaldallee 5 D-8520 Erlangen (DE)**

EP 0 035 156 B1

## Beschreibung

Die Erfindung betrifft einen freischwingenden Sperrwandler mit einer zwischen einer ersten und einer zweiten Eingangsklemme liegenden Reihenschaltung der Primärwicklung eines Transformators, eines Schalttransistors und eines Widerstands, wobei die Sekundärwicklung des Transformators über einen Gleichrichter und ein Glättungsfilter mit Ausgangsklemmen verbunden ist, wobei der Transformator eine Rückkopplungswicklung aufweist, die mit der Basis des Schalttransistors verbunden ist, und wobei auf der Sekundärseite des Transformators ein Fühler für eine Regelungsabweichung angeordnet ist, der auf die Basis-Spannung des Schalttransistors einwirkt.

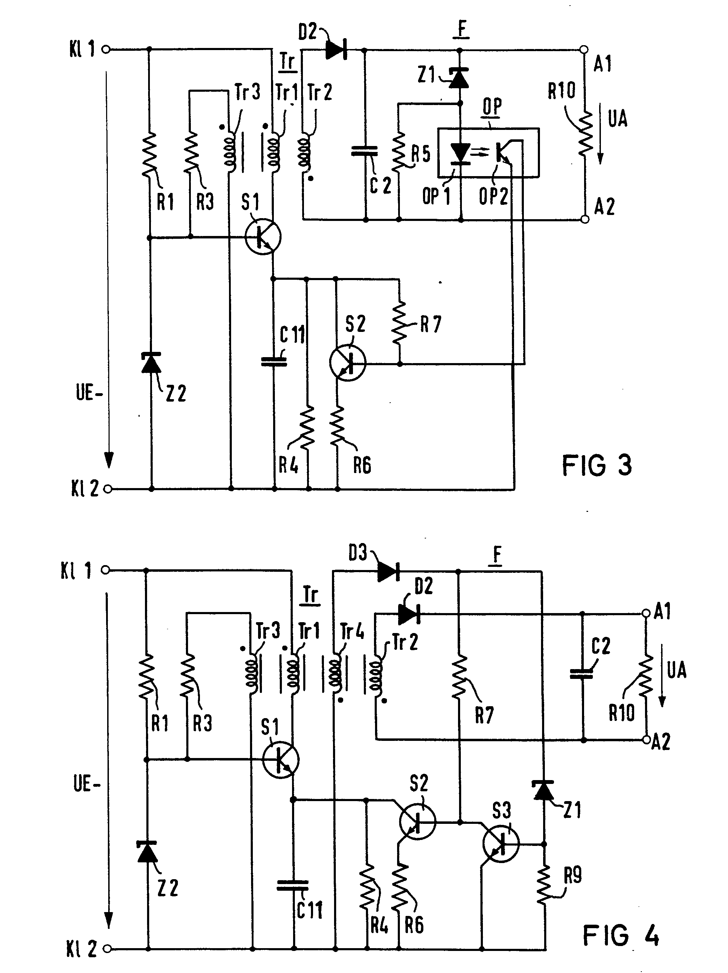

Ein derartiger Sperrwandler ist aus der US-A 39 11 352, insbesondere Figur 4 mit zugehöriger Beschreibung bekannt. Dabei ist die Basis des Schalttransistors ferner an die Anzapfung einer zwischen den beiden Polen der Versorgungsspannung liegenden Reihenschaltung eines Widerstandes und einer Z-Diode angeschlossen. Der Schaltpunkt des Schalttransistors ist dann erreicht, wenn die Basis-Spannung des Schalttransistors etwa gleich dessen Emitter-Spannung wird, d. h. wenn der Spannungsabfall an dem der Emitter-Strecke nachgeschalteten Widerstand gleich der Zenerspannung der Z-Diode wird. Zur Regelung der Ausgangsspannung ist der Z-Diode ein Fototransistor parallel geschaltet.

Der Fototransistor ist mit einer Leuchtdiode gekoppelt. Die Leuchtdiode wird von einem Spannungsfühler, der die Ausgangsspannung des Sperrwandlers erfaßt, angesteuert. Sobald die Ausgangsspannung einen durch die Z-Diode vorgegebenen Wert überschreitet, wird die Leuchtdiode angesteuert und damit der der Z-Diode parallel liegende Fototransistor leitend. Damit wird der Schalttransistor sofort gesperrt. Dabei fällt die Ausgangsspannung ab, bis die Leuchtdiode nicht mehr angesteuert wird. Der Schalttransistor wird dann wieder freigegeben, so daß der Sperrschwinger normal weiterschwingt, bis der Ansprechpunkt des Spannungsfühlers wieder überschritten wird usw.

Diese Schaltung stellt also einen Zweipunkt-Regler dar, der durch die Welligkeit der Ausgangsspannung gesteuert wird. Das hat allerdings den Nachteil, daß die Regelung mit einer relativ großen Trägheit, die durch die Kapazität des Glättungskondensators gegeben ist, eingreift. Außerdem setzt diese Art der Regelung eine gewisse, an sich störende Welligkeit der Ausgangsspannung voraus.

Aus dem Buch « Transistor-Gleichspannungswandler » von Helmut Schweitzer, 1969, S. 34 ist ebenfalls ein freischwingender Sperrwandler mit einer zwischen einer ersten und einer zweiten Eingangsklemme liegenden Reihenschaltung eines Schalttransistors und der Primärwicklung eines Transformators bekannt, wobei die Sekundärwicklung des Transformators über einen Gleichrichter und ein Glättungsfilter mit Ausgangsklemmen verbunden ist. Der Transformator weist eine Rückkopplungswicklung auf, die mit der Basis des Schalttransistors verbunden ist. Der Emitter des Schalttransistors ist unmittelbar mit dem Bezugspotential der Schaltungsanordnung verbunden und das zweite Ende der Rückkopplungswicklung ist an den Anschluß eines an der Eingangsklemme liegenden Spannungsteilers gekoppelt. Durch diese Rückkopplung ergibt sich ein Schwingungsverhalten, das nach der Darstellung der genannten Literaturstelle von den Arbeitskennlinien des Schalttransistors abhängig ist. Eine Regelung für die Ausgangsspannung des Sperrwandlers ist nicht vorgesehen. Eine Regelung z. B. durch Beeinflußung der Basis-Vorspannung des Schalttransistors wäre auch mit großen Schwierigkeiten verbunden, da das nichtlineare Kennlinienfeld mit in die Regelung eingehen würde.

Möglichkeiten zur Regelung von Schaltnetzteilen sind in dem Artikel « Die Regelung von Schaltnetzteilen » von R. Ranfft aus der im November 1976 von der Firma VALVO veröffentlichten Vortragsreihe « Schaltnetzteile » beschrieben. Dabei ist beispielsweise auf der Ausgangsseite eines Sperrwandlers die Reihenschaltung eines Hilfstransistors und der Primärwicklung eines Meßtransformators angeordnet, wobei der Hilfstransistor gleichzeitig mit dem Schalttransistor leitend ist. An der Sekundärseite des Meßtransformators ist die Reihenschaltung einer Z-Diode und eines Spannungsteiler angeordnet. Damit erfolgt ein Vergleich der Ausgangsspannung mit der Zenerspannung als Referenzspannung. Dabei kann an einem Abgriff des Spannungsteilers eine Steuerspannung abgegriffen werden, die vom Ausgangskreis galvanisch entkoppelt ist. In diesem Artikel wird auch auf die Möglichkeit einer galvanischen Entkopplung mit Hilfe von Optokopplern hingewiesen. Möglichkeiten, wie mit Hilfe der gewonnenen Steuerspannung der Schalttransistor beeinflußt wird, sind nicht dargestellt.

Aufgabe der Erfindung ist es, einen freischwingenden Sperrwandler so auszugestalten, daß seine Ausgangsspannung mit der Basis-Emitter-Spannung als kontinuierlich veränderliche Stellgröße regelbar ist.

Diese Aufgabe wird erfindungsgemäß durch die kennzeichnenden Merkmale der Ansprüche 1 oder 2 gelöst.

Den Schaltungsanordnungen nach den beiden Ansprüchen ist gemeinsam, daß in der Schaltstrecke des Transistors ein Widerstand angeordnet ist. Dabei ist der Schaltpunkt des Transistors erreicht, sobald die an der Basis anstehende Spannung des Schalttransistors gleich der Emitterspannung ist. Der Schaltpunkt ist unabhängig vom Kennlinienfeld. Der Schaltpunkt und damit die Ausgangsspannung wird bei der Ausführungsform nach Anspruch 1 durch die Beeinflussung der Basis-Vorspannung über einen Fühler für die Regelungsabweichung geregelt. Bei der Schaltungsanordnung nach Anspruch 2 erfolgt die Regelung durch Veränderung der Emitterspannung ebenfalls über einen Fühler für die Regelungsabweichung. In beiden Fällen ist eine sehr einfache Regelung möglich, die von der Kennlinie der eingesetzten Transistoren weitgehend unabhängig ist.

2

Der Fühler für die Regelungsabweichung kann aus einer zwischen den Ausgangsklemmen liegenden Reihenschaltung einer Z-Diode und der Diode eines optoelektronischen Koppelelements bestehen, wobei die Kollektor-Emitterstrecke des Transistors des optoelektronischen Koppelelements den Ausgang des Fühlers darstellt. Dabei dient die Zenerspannung der Z-Diode als Referenzwert für die Ausgangsspannung, wobei Abweichungen der Ausgangsspannung durch das optoelektronische Koppelelement galvanisch getrennt auf die Eingangsseite übertragen werden.

Alternativ kann der Fühler für die Regelungsabweichung eine auf den Transformator aufgebrachte Meßwicklung aufweisen, der die Reihenschaltung einer Diode, einer Z-Diode und eines Widerstandes parallel geschaltet ist, wobei der Verbindungspunkt von Z-Diode und Widerstand mit der Basis eines Hilfstransistors verbunden ist, dessen Kollektor-Emitterstrecke den Ausgang des Fühlers darstellt. Dabei wird ebenfalls die galvanische Trennung zum Eingangskreis durch die gesonderte Meßwicklung erreicht wird.

Parallel zum Kondensator kann ein Widerstand angeordnet sein. Dieser Widerstand dient als Entladewiderstand für den Kondensator, so daß beispielsweise beim Einschalten der Schaltungsanordnung bei entladenem Kondensator stets definierte Spannungsverhältnisse herrschen.

Dem Fühler für die Regelungsabweichung kann ein Verstärker nachgeschaltet sein. Dadurch wird die Empfindlichkeit der Regelung erhöht.

Zwischen der Basis des Schalttransistors und dem Bezugspotential der Schaltungsanordnung kann eine Z-Diode angeordnet sein. Dadurch wird die Spannung an der Basis des Schalttransistors und damit auch die mit dem Sperrwandler übertragene Leistung begrenzt, sodaß auf einfache Weise ein Überlastschutz erreicht wird.

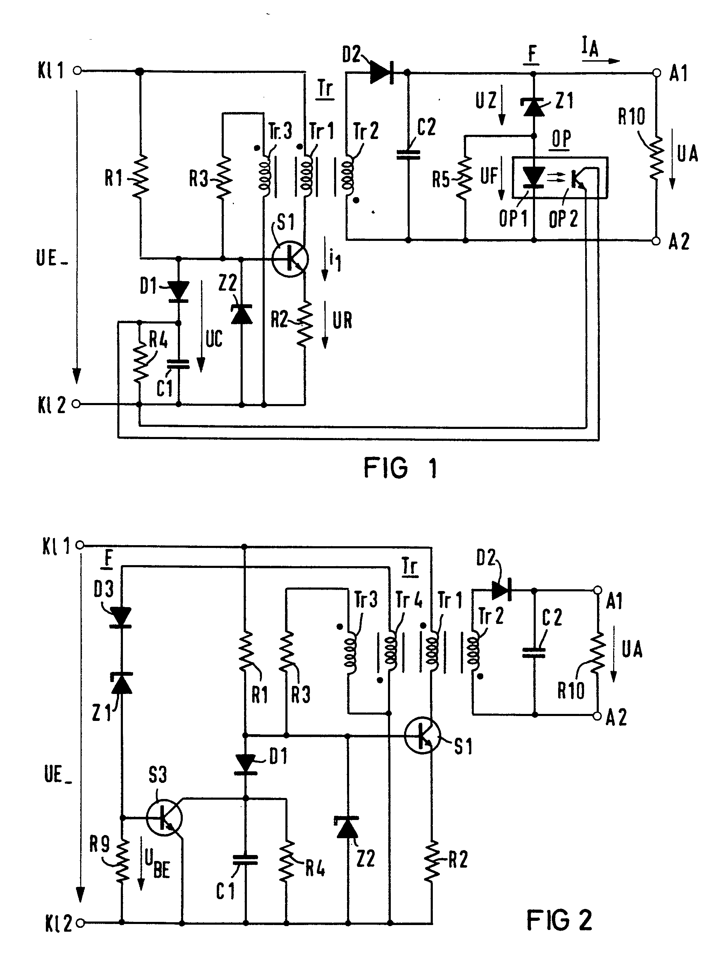

Ausführungsbeispiele der Erfindung werden nachfolgend näher anhand der Figuren 1 bis 4 erläutert. Dabei sind in den einzelnen Figuren gleiche Bauteile mit gleichen Bezugszeichen versehen.

Bei der Schaltungsanordnung nach Fig. 1 liegt zwischen den Eingangsklemmen KI1 und KI2 die Reihenschaltung der Primärwicklung Tr1 eines Transformators Tr, eines Schalttransistors S1 und eines Widerstandes R2. Der Transformator Tr weist eine Rückkopplungswicklung Tr3 auf, die über einen Widerstand R3 mit der Basis des Schalttransistors S1 verbunden ist. In die Basis des Schalttransistors S1 wird ferner über den Widerstand R1 von der Eingangsklemme KI1 ein Strom eingespeist. Die an der Basis anstehende Spannung wird durch die Z-Diode Z2 begrenzt. Die Sekundärwicklung Tr2 des Transformators Tr ist über eine Diode D2 mit Ausgangsklemmen A1, A2 verbunden, wobei zur Glättung der Ausgangsspannung UA den Ausgangsklemmen A1, A2 ein Kondensator C2 parallel geschaltet ist.

Die Funktion dieser Sperrwandlerschaltung soll zunächst ohne die Regelungseinrichtung im Ablauf einer Schwingungsperiode erläutert werden. Es wird zunächst davon ausgegangen, daß der Schalttransistor S1 eingeschaltet ist und über den Widerstand R1 mit Basisstrom versorgt wird. Durch die induktive Wirkung der Primärwicklung Tr1 steigt der Strom i1 über den Schalttransistor S1 linear an. Sobald der Strom i1 so groß geworden ist, daß der Spannungsabfall UR am Widerstand R2 den Wert der Spannung UC zwischen der Basis des Schalttransistors und Bezugspotential erreicht, wird die Basis-Emitterspannung des Schalttransistors S1 zu Null, wodurch dieser sperrt. Beim Sperren des Schalttransistors S1 kehrt sich die Spannung der Sekundärwicklung Tr2 um, so daß die sekundärseitige Diode D2 nunmehr in Leitrichtung gepolt ist und die im Transformator Tr gespeicherte magnetische Energie über die Sekundärwicklung Tr2 in den Ausgangskreis abgegeben wird. Während dieser Zeit wird die Basis-Emitterstrecke des Schalttransistors S1 durch die Spannung an der Rückkopplungswicklung Tr3 über den Widerstand R3 negativ gehalten. Ist die magnetische Energie im Transformator zu Null geworden, so wird auch die Spannung an der Rückkopplungswicklung Tr3 Null, wodurch der Schalttransistor S1 über den Widerstand R1 von der Eingangsklemme KI1 mit einem kleinen Basisstrom versorgt wird, so daß der Schalttransistor S1 wieder einschaltet.

Die an den Ausgangskreis über die Sekundärwicklung Tr2 abgegebene Leistung PA beträgt:

$$PA = 1/2L_1 \cdot I^2_{1M} \cdot f \cdot \eta$$

Dabei ist:
$L_1$ die Induktivität der Wicklung Tr1
$I_{1M}$ der Maximalwert des Stroms durch die Wicklung L1
f die Schaltfrequenz des Wandlers,
$\eta$ der Wirkungsgrad des Wandlers
Für die Ausgangsspannung gilt also:

$$UA = 1/2I_A \cdot L_1 (U_c/R2)^2 \cdot f \cdot \eta$$

wobei R2 der Widerstandswert des Widerstands R2 im Emitterkreis ist.

Wie diese Gleichung zeigt, ist die Ausgangsspannung UA abhängig vom Ausgangsstrom IA. Diese Abhängigkeit läßt sich jedoch beseitigen, wenn die Spannung UC zwischen der Basis des Schalttransistors S1 und dem Bezugspotential an die Änderung des Ausgangsstroms IA angepaßt wird. Darauf beruht die im folgenden beschriebene Regelung.

Zur Erfassung der Regelungsabweichung liegt zwischen den Ausgangsklemmen A1 und A2 die Reihenschaltung einer Z-Diode und der Diode OP1 eines Optokopplers. Der Diode OP1 ist ein Widerstand R5 parallel geschaltet, von dessen Größe die Empfindlichkeit der Anordnung abhängt. Auf der Primärseite ist der Z-Diode Z2 die Reihenschaltung einer diode D1 und eines Kondensators C1 parallel geschaltet, wobei der Kondensator C1 von einem Widerstand R4 überbrückt ist. Dem Kondensator C1 ist ferner die Transistorstrecke OP2 des Optokopplers OP parallel geschaltet.

Die Auflladung des Kondensators C1 vollzieht sich während der Speicherzeit des Schalttransistors S1 über die Widerstände R1, R3. Wenn die Ausgangsspannung UA die Zenerspannung der Z-Diode Z1 übersteigt, so wird der Transistor OP2 des Optokopplers OP niederohmig und stellt einen Parallelweg zum Kondensator C1 dar, so daß dessen Auflladung und damit die daran anstehende Spannung UC geringer wird. Daher wird der Abschaltzeitpunkt des Transistors, der bei Gleichheit der Spannung UR mit der Spannung UC erreicht und damit von der Spannung UC abhängig ist, bei kleineren Stromwerten erreicht, so daß die Ausgangsspannung in Richtung ihres Sollwertes verringert wird.

Die Regelungsabweichung kann auch mit einer Meßwicklung Tr4 galvanisch getrennt vom Ausgangskreis erfaßt werden. Dies ist in dem Ausführungsbeispiel nach Fig. 2 der Fall. Dabei ist eine Meßwicklung Tr4 des Transformators Tr einerseits direkt mit dem Bezugspotential der Schaltungsanordnung und andererseits über eine Reihenschaltung einer Diode D3, einer Z-Diode Z1 und eines Widerstandes R9 ebenfalls mit dem Bezugspotential verbunden. Dem Kondensator C1, der wie bei der Schaltung nach Fig. 1 über eine Diode D1 mit der Basis des Schalttransistors S1 verbunden ist, ist ein Hilfstransistor S3 parallel geschaltet, dessen Basis mit dem Verbindungspunkt der Z-Diode Z1 und des Widerstandes R9 verbunden ist. In diesem Ausführungsbeispiel besteht also der Fühler für die Regelungsabweichung aus der Meßwicklung Tr4, der Diode D3, der Z-Diode Z1, dem Widerstand R9 und dem Hilfstransistor S3. Ansonsten stimmt diese Anordnung mit der Schaltung nach Fig. 1 überein.

Sobald die über die Meßwicklung Tr4 abgegriffene Ausgangsspannung die Zenerspannung der Z-Diode Z1 übersteigt, beginnt ein Strom über die Diode D3, die Z-Diode Z1 und den Widerstand R9 zu fließen, der einen Spannungsabfall an dem Widerstand R4 verursacht. Damit wird die Basis des Hilfstransistors S3 positiv, so daß dieser leitet und die Ladung des Kondensators C1 verringert. Wie beim Ausführungsbeispiel nach Fig. 1 wird damit die Einschaltzeit des Schalttransistors S1 kürzer und die Ausgangsspannung sinkt, so daß diese auf ihren Sollwert geregelt wird.

In weiteren Ausführungsbeispielen nach den Fig. 3 und 4, wird der Sperrwandler nicht wie nach den Ausführungsbeispielen nach Fig. 1 und 2 durch Veränderung der Spannung an der Basis des Schalttransistors S1, sondern durch Veränderung der Spannung an Emitter geregelt. Auch dabei wird jedoch letztlich die Spannung zwischen Basis und Emitter verändert.

Beim Ausführungsbeispiel nach Fig. 3 wird bei den bereits beschriebenen Ausführungsformen dem Schalttransistor S1 über einen Widerstand R1 ein Basisstrom zugeführt, wobei die Basisspannung durch eine Z-Diode Z2 begrenzt wird. Die Rückkopplung erfolgt ebenfalls über eine Rückkopplungswicklung Tr3 und einen mit der Basis des Schalttransistors S1 verbundenen Widerstand R3. Zwischen dem Emitter des Schalttransistors S1 und zweiter Eingangsklemme Kl2 ist die Parallelschaltung eines Kondensators C11, eines Widerstands R4 und der Reihenschaltung eines Steuertransistors S2 mit einem Widerstand R6 angeordnet. Als Fühler für die Regelungsabweichung dient wie bei der Schaltungsanordnung nach Fig. 1 eine im Ausgangskreis liegende Reihenschaltung einer Z-Diode Z1 mit einem optoelektronischen Koppelelement OP. Der Transistor OP2 des optoelektronischen Koppelelements OP ist einerseits mit der Basis des Steuertransistors S2 und andererseits mit dem Bezugspotential der Schaltungsanordnung verbunden. Zwischen Kollektor und Basis des Steuertransistors S2 ist ein Widerstand R7 angeordnet.

Sobald die Ausgangsspannung die mit der Z-Diode Z1 gegebene Referenzspannung überschreitet, wird der Transistor OP2 leitend. Dadurch wird die Spannung an der Basis des Steuertransistors S2 verringert, so daß dieser sperrt. Der Kondensator C11 wird damit auf höhere Spannung aufgeladen, so daß die Spannung zwischen Basis und Emitter des Schalttransistors S1 abnimmt und wie in den bereits beschriebenen Ausführungsbeispielen das Einschaltverhältnis des Schalttransistors S1 abnimmt, so daß die Ausgangsspannung auf ihren Sollwert geregelt wird.

Fig. 4 zeigt ein Ausführungsbeispiel, bei dem die Regelung des Sperrwandlers ebenfalls im Emitterkreis des Schalttransistors S1 erfolgt, wobei jedoch im Unterschied zum Ausführungsbeispiel nach Fig. 3 die Regelungsabweichung über eine Meßwicklung Tr4 erfaßt wird.

Die Meßwicklung Tr4 ist ebenfalls einerseits mit dem Bezugspotential und andererseits über eine Diode D3, eine Z-Diode Z1 und einen Widerstand R9 ebenfalls mit dem Bezugspotential verbunden. Zwischen dem Verbindungspunkt der Diode D3 mit der Z-Diode Z1 und dem Bezugspotential ist die Reihenschaltung eines Widerstands R7 und eines Hilfstransistors S3 angeordnet, dessen Basis mit dem Verbindungspunkt zwischen Z-Diode Z1 und Widerstand R9 verbunden ist. Wie beim Ausführungsbeispiel nach Fig. 3 liegt zwischen dem Emitter des Schalttransistors S1 und dem Bezugspotential der Schaltungsanordnung die Parallelschaltung eines Kondensators C11, eines Widerstands R4 und der Reihenschaltung eines Steuertransistors S2 und eines Widerstands R6, wobei die Basis des Steuertransistors S2 am Verbindungspunkt des Widerstands R7 mit dem Hilfstransistor S3 liegt.

Sobald die mit der Meßwicklung Tr4 abgegriffene Ausgangsspannung die Zenerspannung der Z-Diode Z1 übersteigt, fließt ein Basisstrom in den Hilfstransistor S3, der diesen in den leitenden Zustand bringt. Der Hilfstransistor S3 dient als Verstärker und Inverter für die zu erfassende Regelungsabweichung. Bei leitendem Hilfstransistor S3 sinkt die Spannung an der Basis des Steuertransistors S2, so

4

daß dieser sperrt und der Kondensator C11 auf höhere Spannungswerte aufgeladen wird. Wegen der damit kleiner werdenden Spannung zwischen Basis und Emitter des Schalttransistors S1 wird dessen Einschaltverhältnis kleiner, so daß die Ausgangsspannung sinkt und auf ihren Sollwert geregelt wird.

Mit den beschriebenen Schaltungsanordnungen ist es also mit geringem Aufwand möglich, die Ausgangsspannung eines freischwingenden Sperrwandlers auf einen konstanten Wert zu regeln. Die Empfindlichkeit der Regelung kann dadurch erhöht werden, daß dem Fühler für die Regelungsabweichung ein Verstärker nachgeschaltet ist.

**Ansprüche**

1. Freischwingender Sperrwandler mit einer zwischen einer ersten (Kl1) und einer zweiten Eingangsklemme (Kl2) liegenden Reihenschaltung der Primärwicklung (Tr1) eines Transformators (Tr), eines Schalttransistors (S1) und eines Widerstands (R2), wobei die Sekundärwicklung (Tr2) des Transformators (Tr) über einen Gleichrichter (D2) und ein Glättungsfilter (C2) mit Ausgangsklemmen (A1, A2) verbunden ist, wobei der Transformator (Tr) eine Rückkopplungswicklung (Tr3) aufweist, die mit der Basis des Schalttransistors (S1) verbunden ist, und wobei auf der Sekundärseite des Transformators ein Fühler für eine Regelungsabweichung angeordnet ist, der auf die Basisspannung des Schalttransistors (S1) einwirkt, dadurch gekennzeichnet, daß zwischen erster und zweiter Eingangsklemme (Kl1, Kl2) die Reihenschaltung eines Widerstands (R1), einer Diode (D1) und eines Kondensators (C1) liegt, wobei der Verbindungspunkt zwischen Widerstand (R1) und Diode (D1) mit der Basis des Schalttransistors (S1) verbunden ist und der Widerstand des parallel zum Kondensator (C1) geschalteten Fühlers (F) durch die Regelungsabweichung beeinflußbar ist (Fig. 1 u. 2).

2. Freischwingender Sperrwandler mit einer zwischen einer ersten (Kl1) und einer zweiten Eingangsklemme (Kl2) liegenden Reihenschaltung der Primärwicklung (Tr1) eines Transformators (Tr), eines Schalttransistors (S1) und der Parallelschaltung eines Kondensators (C11) und eines Widerstands (R4), wobei die Sekundärwicklung (TR2) des Transformators (Tr) über einen Gleichrichter (D2) und ein Glättungsfilter (C2) mit Ausgangsklemmen (A1, A2) verbunden ist, wobei der Transformator (Tr) eine Rückkopplungswicklung (Tr3) aufweist, die mit der Basis des Schalttransistors (S1) verbunden ist und wobei auf der Sekundärseite des Transformators ein Fühler für die Regelungsabweichung angeordnet ist, der auf den Schaltzeitpunkt des Schalttransistors einwirkt, dadurch gekennzeichnet, daß dem Widerstand (R4) und dem Kondensator (C11) ein Steuertransistor (S2) parallel geschaltet sind, wobei die Basis des Steuertransistors (S2) mit dem Fühler (F) für die Regelungsabweichung verbunden ist (Fig. 3 u. 4).

3. Freischwingender Sperrwandler nach Anspruch 1 oder 2, dadurch gekennzeichnet, daß der Fühler (F) für die Regelungsabweichung aus einer zwischen den Ausgangsklemmen (A1, A2) liegenden Reihenschaltung einer Z-Diode (Z1) und der Diode (OP1) eines optoelektronischen Koppelelements (OP) besteht, wobei die Kollektor-Emitter-Strecke des Transistors (OP2) des optoelektronischen Koppelelements (OP) den Ausgang des Fühlers (F) darstellt (Fig. 1 u. 3).

4. Freischwingender Sperrwandler nach Anspruch 1 oder 2, dadurch gekennzeichnet, daß der Fühler (F) für die Regelungsabweichung eine auf den Transformator (Tr) aufgebrachte Meßwicklung (Tr4) aufweist, der die Reihenschaltung einer Diode (D3), einer Z-Diode (Z1) und eines Widerstandes (R9) parallel geschaltet ist, wobei der Verbindungspunkt von Z-Diode (Z1) und Widerstand (R9) mit der Basis eines Hilfstransistors (S3) verbunden ist, dessen Kollektor-Emitter-Strecke den Ausgang des Fühlers (F) darstellt (Fig. 2 u. 4).

5. Freischwingender Sperrwandler nach einem der Ansprüche 1 bis 4, dadurch gekennzeichnet, daß parallel zum Kondensator (C1, C11) ein Widerstand (R4) angeordnet ist.

6. Freischwingender Sperrwandler nach einem der Ansprüche 1 bis 5, dadurch gekennzeichnet, daß dem Fühler (F) für die Regelungsabweichung ein Verstärker nachgeschaltet ist.

7. Freischwingender Sperrwandler nach einem der Ansprüche 1 bis 6, dadurch gekennzeichnet, daß zwischen der Basis des Schalttransistors (S1) und dem Bezugspotential der Schaltungsanordnung eine Z-Diode (Z2) angeordnet ist.

**Claims**

1. Self-oscillating blocking converter having a series connection, located between a first (Kl1) and a second input terminal (Kl2), of the primary winding (Tr1) of a transformer (Tr), a switching transistor (S1) and a resistor (R2), the secondary winding (Tr2) of the transformer (Tr) being connected *via* a rectifier (D2) and a smoothing filter (C2) to output terminals (A1, A2), the transformer (Tr) having a feedback winding (Tr3), which is connected to the base of the switching transistor (S1), and a sensor for a control deviation being arranged on the secondary side of the transformer, which sensor acts on the base voltage of the switching transistor (S1), characterised in that the series connection of a resistor (R1), a diode (D1) and a capacitor (C1) lies between the first and second input terminals (Kl1, Kl2), the point of connection between the resistor (R1) and diode (D1) being connected to the base of the switching transistor (S1), and the resistance of the sensor (F) connected in parallel with the capacitor (C1) being able to be affected by the control deviation. (Figs. 1 and 2).

2. Self-oscillating blocking converter having a series connection, lying between a first (Kl1) and a second input terminal (Kl2), of the primary winding (Tr1) of a transformer (Tr), a switching transistor (S1), and the parallel connection of a capacitor (C11) and a resistor (R4), the secondary winding (Tr2) of the transformer (Tr) being connected via a rectifier (D2) and a smoothing filter (C2) to output terminals (A1, A2), the transformer (Tr) having a feedback winding (Tr3), which is connected to the base of the switching transistor (S1), and a sensor for the control deviation being arranged on the secondary side of the transformer, which sensor affects the switching time of the switching transistor, characterised in that a control transistor (S2) is connected in parallel with the resistor (R4) and the capacitor (C1), the base of the control transistor (S2) being connected to the sensor (F) for the control deviation (Figs. 3 and 4).

3. Self-oscillating blocking converter according to claim 1 or 2, characterised in that the sensor (F) for the control deviation consists of a series connection, lying between the output terminals (A1, A2), of a Z-diode (Z1) and the diode (OP1) of an optoelectronic coupling element (OP), the collector-to-emitter stage of the transistor (OP2) of the optoelectronic coupling element (OP) representing the output of the sensor (F) (Figs. 1 and 3).

4. Self-oscillating blocking converter according to claim 1 or 2, characterised in that the sensor (F) for the control deviation has a measuring winding (Tr4) mounted on the transformer (Tr), to which is connected in parallel the series connection of a diode (D3), a Z-diode (Z1) and a resistor (R9), the point of connection of the Z-diode (Z1) and resistor (R9) being connected to the base of an auxiliary transistor (S3), whose collector-to-emitter stage represents the output of the sensor (F) (Figs. 2 and 4).

5. Self-oscillating blocking converter according to one of claims 1 to 4, characterised in that a resistor (R4) is arranged parallel to the capacitor (C1, C11).

6. Self-oscillating blocking converter according to one of claims 1 to 5, characterised in that an amplifier is connected subsequent to the sensor (F) for the control deviation.

7. Self-oscillating blocking converter according to one of claims 1 to 6, characterised in that a Z-diode (Z2) is arranged between the base of the switching transistor (S1) and the reference potential of the circuit arrangement.

## Revendications

1. Convertisseur à oscillateur bloqué auto-oscillant comportant un circuit série, disposé entre une première borne d'entrée (Kl1) et une seconde borne d'entrée (Kl2) et constitué par l'enroulement primaire (Tr1) d'un transformateur (Tr), par un transistor de commutation (S1) et par une résistance (R2), et dans lequel l'enroulement secondaire (Tr2) du transformateur (Tr) est relié par l'intermédiaire d'un redresseur (D2) et d'un filtre de lissage (C2) à des bornes de sortie (A1, A2), et dans lequel le transformateur (Tr) comporte un enroulement de réaction (Tr3) qui est relié à la base du transistor de commutation (S1) et dans lequel sur le côté secondaire du transformateur se trouve disposé un capteur détectant un écart de réglage et qui agit sur la tension de base du transistor de commutation (S1), caractérisé par le fait que le circuit série formé d'une résistance (R1), d'une diode (D1) et d'un condensateur (C1) est disposé entre la première et la seconde bornes d'entrée (A11, A12), le point de liaison entre la résistance (R1) et la diode (D1) étant relié à la base du transistor de commutation (S1), et la résistance du capteur (F) branché en parallèle avec le condensateur (C1) pouvant être influencée par l'écart de réglage (figures 1 et 2).

2. Convertisseur à oscillateur bloqué auto-oscillant comportant un montage série situé entre une première borne d'entrée (Kl1) et une seconde borne d'entrée (Kl2) et constitué par l'enroulement primaire (Tr1) d'un transformateur (Tr), par un transistor de commutation (S1) et par le montage parallèle d'un condensateur (C11) et d'une résistance (R4), et dans lequel l'enroulement secondaire (Tr2) du transformateur est relié par l'intermédiaire d'un redresseur (D2) et d'un filtre de lissage (C2) à des bornes de sortie (A1, A2), et dans lequel le transformateur (Tr) comporte un enroulement de réaction (Tr3) qui est relié à la base du transistor de commutation (S1), et dans lequel sur le côté secondaire du transformateur se trouve disposé un capteur détectant l'écart de réglage et qui agit sur l'instant de commutation du transistor de commutation, caractérisé par le fait qu'un transistor de commande (S2) est branché en parallèle avec la résistance (R4) et avec le condensateur (C11), la base du transistor de commande (S2) étant reliée au capteur (S) détectant l'écart de réglage (figures 3 et 4).

3. Convertisseur à oscillateur bloqué auto-oscillant suivant la revendication 1 ou 2, caractérisé par le fait que le capteur (F) détectant l'écart de réglage est constitué par le montage série situé, entre les bornes de sortie (A1, A2) et constitué par une diode Zener (Z1) et par une diode (OP1) d'un organe de coupage autoélectronique (OP), la voie collecteur-émetteur du transistor (OP2) de l'organe de couplage opto-électronique (OP) représentant la sortie du capteur (F) (figures 1 et 3).

4. Convertisseur à oscillateur bloqué auto-oscillant suivant la revendication 1 ou 2, caractérisé par le fait que le capteur (F) détectant l'écart de réglage comporte un enroulement de mesure (Tr4) monté sur le transformateur (Tr) et en parallèle avec lequel est monté le circuit série formé d'une diode (D3), d'une diode Zener (Z1) et d'une résistance (R9), le point de liaison entre la diode Zener (Z1) et la résistance (R9) étant relié à la base d'un transistor auxiliaire (S3) dont la voie collecteur-émetteur représente la sortie du capteur (F) (figures 2 et 4).

5. Convertisseur à oscillateur bloqué auto-oscillant suivant l'une des revendications 1 à 4, caractérisé par le fait qu'une résistance (R4) est montée en parallèle avec le condensateur (C1, C11).

6. Convertisseur à oscillateur bloqué auto-oscillant suivant l'une des revendications 1 à 5, caractérisé par le fait qu'un amplificateur est branché en série en aval du capteur (F) détectant l'écart de réglage.

7. Convertisseur à oscillateur bloqué auto-oscillant suivant l'une des revendications 1 à 6, caractérisé par le fait qu'une diode Zener (Z2) est montée entre la base du transistor de commutation (S1) et le potentiel de référence du montage.

FIG 1

FIG 2

FIG 3

FIG 4